# EUROPEAN PATENT APPLICATION

(11) **EP 2 757 330 A1**
(43) Date of publication of application: **23.07.2014**
(21) Application number: 12831020.8
(22) Date of filing: 14.09.2012
(51) Int. Cl.: F24H 1/00, C02F 1/46, C02F 5/00, F24H 1/18

(54) **HEAT PUMP HOT-WATER SUPPLY DEVICE**

(30) Priority: 15.09.2011 JP 2011201510
(71) Applicant: Daikin Industries, Ltd., Osaka 530-8323 (JP)
(72) Inventor: SHIBATA, Yutaka, Osaka-shi Osaka 530-8323 (JP); YOSHIDA, Kaori, Osaka-shi Osaka 530-8323 (JP); AGATA, You, Osaka-shi Osaka 530-8323 (JP)
(74) Representative: Goddar, Heinz J.
(86) International application number: PCT/JP2012/005869
(87) International publication number: WO 2013/038692

(57) **Abstract**

A heat pump hot-water supply device 11 includes: a tank 15; a refrigerant circuit 10 having a water heat exchanger 21; water conduits 27, 29; an electrolysis device 41 having an electrode pair 49 provided in a water channel upstream of the water heat exchanger 21, in a flow channel of water that includes the water conduits 27, 29; and a control unit 33 that executes a reversal initial operation of reversing the polarity of the electrode pair 49 in the electrolysis device 41, and discharging, at a position upstream of the water heat exchanger 21, water that is treated in the electrolysis device 41 during a period after polarity reversal until a predetermined condition is satisfied.

## Description

### Technical Field

The present invention relates to a heat pump hot-water supply device that is provided with an electrolysis device.

### Background Art

Ordinarily, heat pump hot-water supply devices are provided with a tank that stores water, a refrigerant circuit having a water heat exchanger that heats water through exchange of heat with a refrigerant, and a water conduit through which water stored in the tank is fed to the water heat exchanger and water heated in the water heat exchanger is returned to the tank. In these heat pump hot-water supply devices, tap water, well water or the like is ordinarily used as a water supply source of the water that is stored in the tank.

Tap water and well water comprise components (hereafter also referred to as scale components) such as calcium ions, magnesium ions or the like, that give rise to formation of scale. Scale such as calcium salts, magnesium salts or the like becomes accordingly deposited in heat pump hot-water supply devices. In particular, groundwater such as well water has a water quality such that the concentration of scale components is higher, and scale forms more readily, than in the case of tap water. In particular, scale deposits readily in the water heat exchanger, since the temperature of water rises therein through heating. Deposition of scale on the inner face of the pipes of the water heat exchanger may give rise to problems of impaired heat transfer performance of the water heat exchanger, as well as narrowing of the flow channel in the pipes.

For instance, Patent Document 1 discloses a water heater wherein a heat exchanger of combustion gas and water is provided in a flow channel of a combustion gas. In this water heater an electrode-type scale component precipitation deposition device is provided in a pipe on a feedwater inlet-side of the heat exchanger. It is found that in Patent Document 1, deposition of scale in the heat exchanger can be prevented by causing part of the scale component to be deposited on the surface of the electrodes of the electrode-type scale component precipitation deposition device. Further, it is deemed that scale deposited on the surface of the electrodes can be caused to detach from the surface of the electrodes through reversal, at every set time, of the potential of the electrodes of the electrode-type scale component precipitation deposition device.

Conventional methods such as the above, however, fail in some instances to elicit a sufficient effect of suppressing deposition of scale in the water heat exchanger.

Patent Document 1: Japanese Patent Application Publication No. H3-170747

### Summary of the Invention

It is an object of the present invention to provide a heat pump hot-water supply device in which deposition of scale in a water heat exchanger can be efficiently suppressed.

The heat pump hot-water supply device of the present invention comprises: a tank (15) that stores water; a refrigerant circuit (10) having a water heat exchanger (21) that heats water through exchange of heat with a refrigerant; a water conduit (27, 29) through which water stored in the tank (15) is fed to the water heat exchanger (21) and water heated in the water heat exchanger (21) is returned to the tank (15); an electrolysis device (41) having an electrode pair (49), the electrolysis device being provided in a water channel upstream of the water heat exchanger (21), in a flow channel of water that includes the water conduit (27, 29); and a control unit (33) that executes a reversal initial operation of reversing a polarity of the electrode pair (49) in the electrolysis device (41), and discharging, at an upstream position that is positioned upstream of the water heat exchanger (21), water that is treated in the electrolysis device (41) during a period after polarity reversal until a predetermined condition is satisfied.

### Brief Description of the Drawings

Fig. 1 is a configuration diagram illustrating a heat pump hot-water supply device according to a first embodiment of the present invention.
Fig. 2 is a cross-sectional diagram illustrating an example of an electrolysis device of the heat pump hot-water supply device.
Fig. 3 is a graph illustrating a relationship between electrolysis time and water hardness.
Fig. 4 is a schematic diagram illustrating a control example 1 of the heat pump hot-water supply device.
Fig. 5 is a schematic diagram illustrating a control example 2 of the heat pump hot-water supply device.
Fig. 6 is a schematic diagram illustrating a control example 3 of the heat pump hot-water supply device.
Fig. 7 is a schematic diagram illustrating a control example 4 of a heat pump hot-water supply device according to a second embodiment of the present invention.
Fig. 8 is a cross-sectional diagram illustrating another example of an electrolysis device of the heat pump hot-water supply device.

### Description of Embodiments

### First embodiment

### Heat pump hot-water supply device

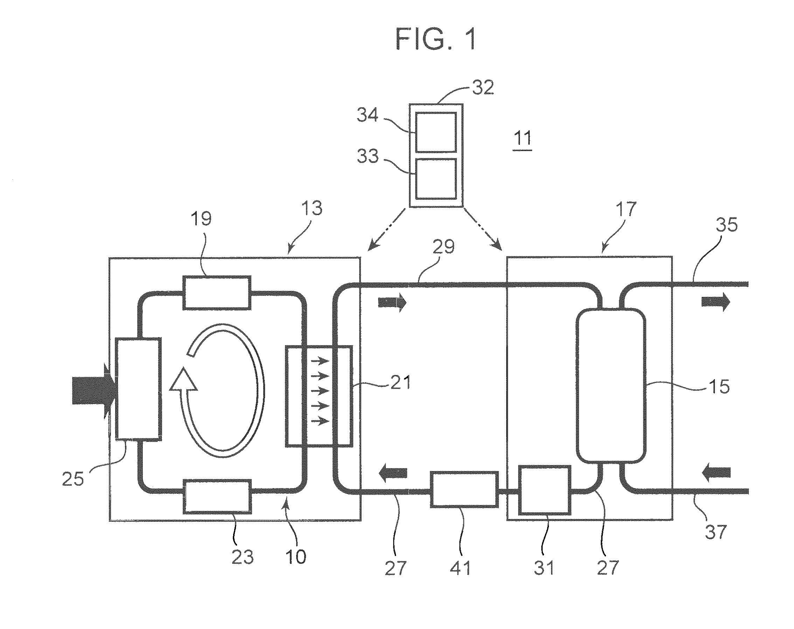

A heat pump hot-water supply device 11 according to a first embodiment of the present invention will be explained next with reference to accompanying drawings. As illustrated in Fig. 1, a heat pump hot-water supply device 11 according to the present embodiment comprises a heat pump unit 13, a hot water storage unit 17, an electrolysis device 41 and a controller 32 that controls the foregoing.

The heat pump unit 13 comprises a refrigerant circuit 10. The refrigerant circuit 10 is made up of a compressor 19, a water heat exchanger 21, an electric expansion valve 23, an air heat exchanger 25 and pipes that connect the foregoing. In the present embodiment, carbon dioxide is used as the refrigerant that circulates through the heat pump unit 13, but the embodiment is not limited thereto, and other refrigerants may be used. In the water heat exchanger 21, the refrigerant exchanges heat with the water that circulates through the hot water storage unit 17, and water is heated as a result. In the air heat exchanger 25, the refrigerant exchanges heat with outside air and absorbs heat from the latter.

The hot water storage unit 17 has a tank 15 that stores water, and a pump 31. The tank 15 and the water heat exchanger 21 are connected by a water conduit. The water conduit comprises a water inlet pipe 27 through which water of the tank 15 is fed to the water heat exchanger 21, and a hot water outlet pipe 29 through which there is returned, to the tank 15, water that has been heated through heat exchange with the water heat exchanger 21. A pump 31 for feeding water is provided in the water inlet pipe 27. The pump 31 causes water in the tank 15 to flow out from the bottom of the tank 15 towards the water inlet pipe 27, and to return to the top of the tank 15 by passing through the water heat exchanger 21 and the hot water outlet pipe 29, in this order.

A water supply pipe 37 and a hot water supply pipe 35 are connected to the tank 15. The hot water supply pipe 35 is connected to the top of the tank 15. The hot water supply pipe 35 is provided in order to draw high-temperature water stored in the tank 15 and supply that hot water to a bathtub or the like. The water supply pipe 37 is connected to the bottom of the tank 15. The water supply pipe 37 is provided in order to supply low-temperature water into the tank 15 from a water supply source. For instance, tap water or groundwater, such as well water or the like, can be used as the water supply source that supplies water to the tank 15. The hot-water supply device 11 of the present embodiment is a once-through hot-water supply device wherein water supplied through the hot water supply pipe 35 is not returned to the tank 15.

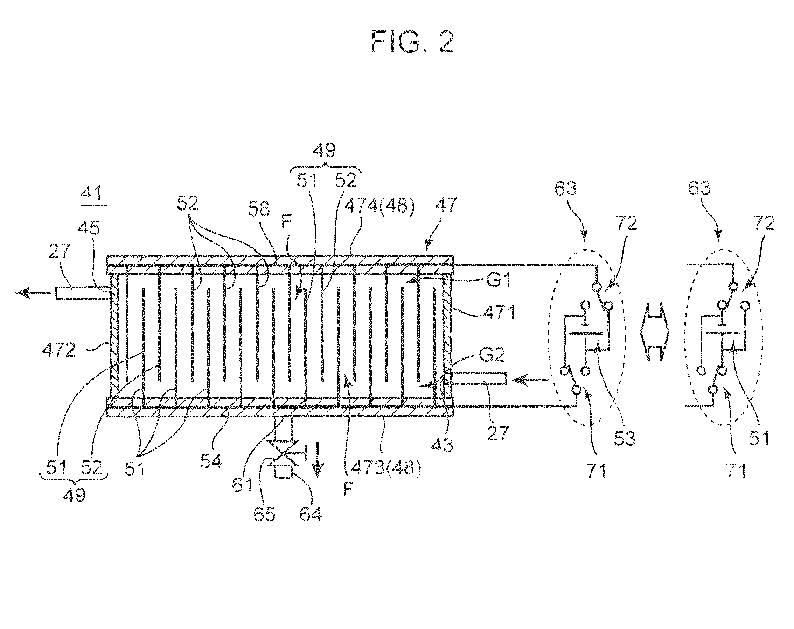

The electrolysis device 41 is disposed in the water inlet pipe 27 at a position upstream of the water heat exchanger 21 and downstream of the pump 31. The electrolysis device 41 has a plurality of electrode pairs 49 described below (Fig. 2).

The controller 32 has a control unit 33 and a memory (storage unit) 34. The memory 34 stores, for instance, a schedule of a heat-up operation, a timing of discharge of scale from the electrolysis device 41, and a timing of reversal of the polarity of the electrode pairs 49. The control unit 33 controls the heat-up operation of heating up water in the tank 15 on the basis of the heat-up operation schedule stored in the memory 34. The control unit 33 further executes, for instance, control of reversing the polarity of the electrode pairs 49 in the electrolysis device 41, and control of discharging scale from the electrolysis device 41. Various control instances relating to the electrolysis device 41 will be explained further on.

The operation of the heat pump hot-water supply device 11 is explained next. In the heat-up operation of heating water in the tank 15, the control unit 33 drives the compressor 19 of the heat pump unit 13, regulates the degree of opening of the electric expansion valve 23, and drives the pump 31 of the hot water storage unit 17. As a result, the low-temperature water in the tank 15 is fed out to the water heat exchanger 21 through a water outlet that is provided at the bottom of the tank 15, and via the water inlet pipe 27, and is heated in the water heat exchanger 21, as illustrated in Fig. 1. The heated high-temperature water passes through the hot water outlet pipe 29 and is returned to the tank 15 via a water inlet that is provided at the top of the tank 15. As a result, high-temperature hot water goes on being sequentially stored in the tank 15, through the top of the latter. In this heat-up operation, the scale component comprised in the water is removed by the electrolysis device 41.

The heat pump hot-water supply device 11 of the present embodiment is a once-through hot-water supply device. In the once-through hot-water supply device 11, the water (hot water) supplied through the hot water supply pipe 35 is used by a user and does not return to the tank 15. Therefore, an amount of water that is substantially identical to the amount of water supplied from the tank 15 via the hot water supply pipe 35 is supplied herein to the tank 15 from the water supply source, via the water supply pipe 37. That is, water comprising a scale component from the water supply source, such as tap water or well water, is replenished into the tank 15 at a high frequency, and in a substantial replenishment amount. In the case of a once-through heat pump hot-water supply device, therefore, the scale component must be removed more efficiently than in the case of a cooling water circulation system of recirculating type, or a recirculating hot-water supply device.

### Electrolysis device

Fig. 2 is a cross-sectional diagram illustrating an example of the electrolysis device 41 that is used in the heat pump hot-water supply device 11. As illustrated in Fig. 2, the electrolysis device 41 is provided with a container 47, a plurality of electrode pairs 49, and a power source 53. For instance, a DC power source is used as the power source 53. Each electrode pair 49 is made up of adjacent electrode plates 51, 52.

In the present embodiment, the container 47 is shaped substantially as a rectangular parallelepiped, but the embodiment is not limited thereto. The container 47 has a first wall 471 positioned on the upstream side of water flow, and a second wall 472 positioned on the downstream side, and a side wall 48 that connects the walls 471, 472. The first wall 471 and the second wall 472 oppose each other in the direction in which the side wall 48 extends (array direction of the plurality of electrode plates 51, 52).

The side wall 48 has a third wall 473 and a fourth wall 474 illustrated in Fig. 2. The third wall 473 and the fourth wall 474 oppose each other in a height direction (top-down direction). The third wall 473 is positioned below the fourth wall 474.

A scale outlet 61, as a discharge portion, is provided in the third wall 473. The scale outlet 61 is provided at substantially a middle position of the container 47 in the longitudinal direction. A discharge pipe 64 is connected to the scale outlet 61. An on-off valve 65 is provided in the discharge pipe 64. The opening and closing operation of the on-off valve 65 is controlled by the control unit 33.

The first wall 471 has a first flow port 43 that functions as a water inlet. The second wall 472 has a second flow port 45 that functions as a water outlet. The water inlet pipe 27 is connected to the first flow port 43 and the second flow port 45. The first flow port 43 is provided at a lower position, in the first wall 471, closer to the third wall 473 than to the fourth wall 474. The second flow port 45 is provided at an upper position, in the second wall 472, closer to the fourth wall 474 than that of the third wall 473. However, the embodiment is not limited thereto. For instance, the first flow port 43 may be provided at an upper position, in the first wall 471, closer to the fourth wall 474 than to the third wall 473, or may be provided at a central position between the third wall 473 and the fourth wall 474. The second flow port 45 may be provided at a lower position, in the second wall 472, closer to the third wall 473 than to the fourth wall 474, or may be provided at a central position between the third wall 473 and the fourth wall 474.

The plurality of electrode plates 51, 52 is disposed inside the container 47. The plurality of electrode plates 51, 52 is arrayed along the longitudinal direction of the container 47. Examples of the material of the electrode plates 51, 52 include, for instance, titanium, platinum, nickel, carbon, graphite, copper, vitreous carbon or the like. In terms of corrosion resistance, however, the electrode plates 51, 52 are preferably electrodes of platinum or having platinum as a main component, or electrodes wherein the surface of a base material of titanium or having titanium as a main component is coated with platinum or a material having platinum as a main component.

The plurality of electrode plates 51, 52 is arrayed spaced at intervals in the thickness direction of the electrode plate. The electrode plates are each disposed in an attitude such that the electrode plates extend in a direction substantially perpendicular to the array direction of the electrode plate. In the present embodiment, the array direction of the plurality of electrode plates 51, 52 coincides substantially with the direction along which the side wall 48 extends (longitudinal direction of the container 47), but the embodiment is not limited thereto. In the present embodiment, the spacings between electrode plates 51, 52 in the respective electrode pairs 49 are identical, but the embodiment is not limited thereto. The plurality of electrode plates 51, 52 includes a plurality of first electrode plates 51 that are connected to one pole of the power source 53, and a plurality of second electrode plates 52 that are connected to the other pole of the power source 53.

The first electrode plates 51 extend from respective base end portions, positioned at the third wall 473, towards the fourth wall 474. The base end portion of each first electrode plate 51 is connected to a connecting section 54 that extends in a direction substantially parallel to the third wall 473. The connecting section 54 is connected to one pole of the power source 53. In the present embodiment, the connecting section 54 is embedded in the third wall 473, but the embodiment is not limited thereto. The connecting section 54 need not be embedded in the third wall 473. A gap G1 through which water can flow is provided between the leading end portion of each first electrode plate 51 (end portion on the fourth wall 474 side) and the inner face of the fourth wall 474.

The second electrode plates 52 extend from respective base end portions, positioned at the fourth wall 474, towards the third wall 473. The base end portion of each second electrode plate 52 is connected to a connecting section 56 that extends in a direction substantially parallel to the fourth wall 474. The connecting section 56 is connected to the other pole of the power source 53. In the present embodiment, the connecting section 56 is embedded in the fourth wall 474, but the embodiment is not limited thereto. The connecting section 56 need not be embedded in the fourth wall 474. A gap G2 through which water can flow is provided between the leading end portion of each second electrode plate 52 (end portion on the third wall 473 side) and the inner face of the third wall 473. The gap between the electrode plates 51, 52 in each electrode pair 49 functions as a flow channel (water flow channel) F through which water flows. A meandering flow channel becomes formed as a result in the container 47.

As illustrated in Fig. 2, the electrolysis device 41 is provided with a reversing mechanism 63 for reversing the polarity of the electrode pairs 49. The reversing mechanism 63 is controlled by the control unit 33. The reversing mechanism 63 has a contact switcher 71 and a contact switcher 72. The polarity of the electrode plates 51, 52 can be reversed through switching of the contact point of the contact switcher 71 and the contact point of the contact switcher 72.

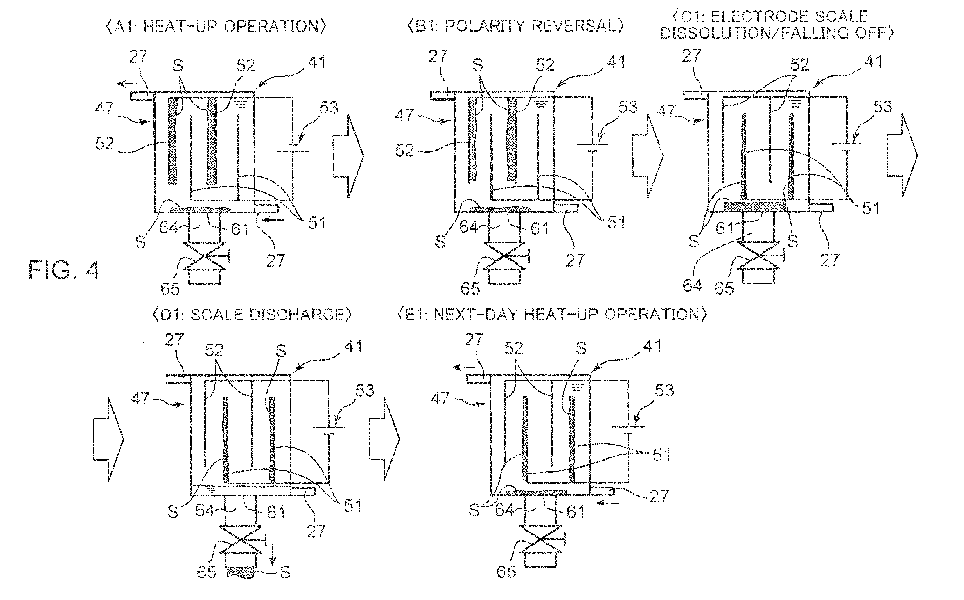

The present embodiment resorts to a reversing mechanism 63 such as the one illustrated in Fig. 2, but the reversing mechanism 63 is not limited to the configuration illustrated in Fig. 2, and may adopt some other configuration, so long as the mechanism is capable of reversing the polarity of the electrode plates 51, 52. In the present embodiment, specifically, the plurality of first electrode plates 51 is for instance connected to the negative electrode of the power source 53, and the plurality of second electrode plates 52 is connected to the positive electrode of the power source 53, when the reversing mechanism 63 is in the state illustrated on the left of Fig. 2. By contrast, the plurality of first electrode plates 51 is connected to the positive electrode of the power source 53, and the plurality of second electrode plates 52 is connected to the negative electrode of the power source 53, when the reversing mechanism 63 is in the state illustrated on the right of Fig. 2. In Fig. 4 to Fig. 8, illustration of the reversing mechanism 63 is omitted.

In the electrolysis device 41 having a configuration such as the above-described one, the scale component comprised in water becomes deposited in the form of scale on the cathodes of the electrode pairs 49 as water flows into the container 47 through the first flow port 43 and flows out of the container 47 through the second flow port 45. The scale adhered to the cathodes is caused to fall off the cathodes, and precipitate in the container 47, as a result of the below-described periodic reversal of polarity of the electrode plates 51, 52.

Specific control examples 1 through 4 of the heat pump hot-water supply device 11 will be explained next. A heat-up operation is scheduled in the heat pump hot-water supply device 11 such that the heat-up operation is ordinarily performed using low-cost electric power during the night-time. Specifically, for instance, the heat-up operation is executed during a time slot from 22:00 to 6:00.

In the control examples, reversal of the polarity of the electrode pairs 49 in the electrolysis device 41, and discharge of scale from the electrolysis device 41, are not carried out during the heat-up operation. In the control examples, the control unit 33 executes a reversal initial operation, such as those described below, once the heat-up operation is complete. The reversal initial operation is executed during a time slot other than during the heat-up operation. The reversal initial operation involves reversing the polarity of the electrode pair 49 in the electrolysis device 41 and discharging, at a position upstream of the water heat exchanger 21, water that is treated in the electrolysis device 41 during a period after polarity reversal until a predetermined condition is satisfied. The reasons for executing the reversal initial operation are set out below.

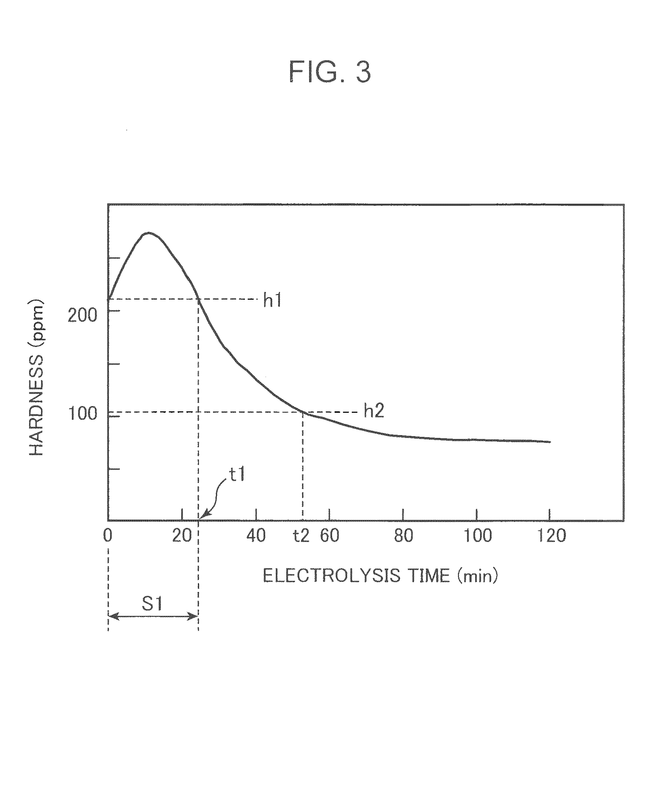

Fig. 3 is a graph illustrating the relationship between electrolysis time and water hardness. In Fig. 3, the point in time zero (min) in the abscissa axis denotes the point in time of polarity reversal in the electrode pairs 49. At an initial stage S1 immediately after polarity reversal of the electrode pair 49 there dissolves the scale adhered to the anode (cathode, before reversal); as a result, the hardness (ppm) of water, i.e. the concentration (ppm) of scale component becomes temporarily higher than that at polarity reversal. Water having thus a high scale component concentration is fed to the water heat exchanger 21; this may promote deposition of scale in the water heat exchanger 21.

In the control examples of the present embodiment, therefore, water of high scale component concentration is discharged upstream of the water heat exchanger 21 through execution of the reversal initial operation. As a result, this allows preventing water having a high scale component concentration from being fed to the water heat exchanger 21, and hence it becomes possible to effectively suppress deposition of scale in the water heat exchanger 21.

Examples of the above predetermined condition in the control examples include, for instance, a condition that, in the reversal initial operation, the elapsed time since reversal of the polarity if the electrode pairs 49 reaches a predetermined reference time t, or a condition that, in the reversal initial operation, water quality, for instance hardness, of the treated water attains a predetermined reference value h; however, the predetermined condition is not limited to the foregoing, and a condition that is based on measurement values other than the reference time t and the reference value h may be resorted to herein as the above predetermined condition.

In the case of the former condition, the elapsed time is measured for instance using a timer, not shown. Specifically, the reference time t can be set for instance to a time t1 at which the quality of water reaches a hardness identical to an initial hardness h1 (ppm) at the time of polarity reversal, but the reference time t is not limited thereto. The reference time t may be set for instance to a value that is greater than time t1, such as time t2 at which there is reached a hardness h2 that is half the initial hardness h1. In one example, the reference time t can be set for instance to 30 minutes, but the reference time t is not limited thereto. Such a reference time t can be established on the basis of a database in which for instance a relationship between water quality and time has been mapped beforehand through experimentation.

In the case of the latter condition, the quality of water can be detected for instance through measurement of the electric conductivity of water. The quality of water can be detected, for instance, by way of a sensor that measures the concentration of calcium ions. Specifically, the reference value h of quality of water can be set to the above-described initial hardness h1, but the reference value h is not limited thereto. The reference value h may be set to a value smaller than the initial hardness h1, for instance a hardness h2 that is half the initial hardness h1. In one example, the reference value h can be set for instance to a hardness of 150 ppm, but the reference value h is not limited thereto.

The former condition and the latter condition are thus water quality conditions that are predetermined on the basis of the quality of water.

### Control example 1

Fig. 4 is a schematic diagram illustrating a control example 1 of the heat pump hot-water supply device 11. In the reversal initial operation in control example 1, the control unit 33 causes water in the container 47 to be treated through application of voltage to the electrode pairs 49, in a state where inflow and outflow of water into/out of the container 47 of the electrolysis device 41 is blocked, and causes the treated water to be discharged at the upstream position when the control unit 33 determines that the above condition is satisfied. Blocking of inflow and outflow of water into/out of the container 47 may be accomplished, for instance, through stopping of the pump 31.

As illustrated in Fig. 4, control example 1 includes step A1 to step E1. In step A1, the control unit 33 executes the heat-up operation. Specifically, the control unit 33 operates the compressor 19 and regulates the degree of opening of the electric expansion valve 23, to cause refrigerant to circulate in the refrigerant circuit 10. The control unit 33 operates the pump 31, and causes voltage to be applied from the power source 53 to the electrode pairs 49, in a state where the plurality of first electrode plates 51 is connected to the positive electrode of the power source 53 and the plurality of second electrode plates 52 is connected to the negative electrode of the power source 53, as illustrated in step A1 of Fig. 4. The on-off valve 65 is in a closed state during the heat-up operation.

High-temperature water becomes stored in the tank 15 upon execution of the heat-up operation. During the heat-up operation, the scale component comprised in water that flows from the tank 15 to the water heat exchanger 21 through the water inlet pipe 27 is removed by the electrolysis device 41. The removed scale component deposits in the form of scale S on the plurality of second electrode plates 52. Part of the removed scale component precipitates at the bottom of the container 47 (top face of the third wall 473).

Upon reception of a signal of heat-up operation completion, the control unit 33 executes control of stopping the compressor 19 and stopping the pump 31, to terminate the heat-up operation. The control unit 33 executes then the reversal initial operation of step B1 to step D1 below.

In step B1, the control unit 33 executes control of reversing the polarity of the electrode pairs 49 in the electrolysis device 41. In step B1 the compressor 19 and the pump 31 remain stopped.

In step C1 next, the control unit 33 applies voltage to the electrode pairs 49, in a state where inflow and outflow of water into/out of the container 47 is blocked, to treat thereby the water in the container 47. In step C1, the pump 31 remains stopped, and hence no water flows into or out of the container 47. Application of voltage to the electrode pairs 49 is continued until a predetermined condition, such as the above-described time condition, water quality condition or the like, is satisfied.

In step C1, the scale S that has deposited on the second electrode plates 52 in step A1 falls off the second electrode plates 52, and precipitates at the bottom of the container 47. In step C1 as well, the scale component in water in the container 47 becomes deposited in the form of scale S on the plurality of first electrode plates 51.

Upon determining that the above condition is satisfied, the control unit 33 executes control of discontinuing the application of voltage to the electrode pairs 49.

Next, in step D1, the control unit 33 executes control of discharging the scale that has precipitated in the container 47. During scale discharge, the pump 31 is stopped and there is no flow of water in the container 47. The control unit 33 controls the on-off valve 65 to bring the latter to an open state. As a result, the scale S that has precipitated on the bottom of the container 47 passes through the scale outlet 61 and the discharge pipe 64, together with water from the container 47, and is discharged out of the container 47. Once scale discharge is complete, the on-off valve 65 is brought to a closed state. The scale outlet 61 is positioned upstream of the water heat exchanger 21, and hence water having a high scale concentration can be prevented from being fed to the water heat exchanger 21.

Next, the control unit 33 executes a next-day heat-up operation illustrated in step E1, on the basis of the schedule of the heat-up operation. Herein, step E1 is identical to step A1, except that now the polarity in the electrode pairs 49 is the reverse of that in step A1. Upon completion of step E1, control is executed in the same way as in step B1 to step D1.

### Control example 2

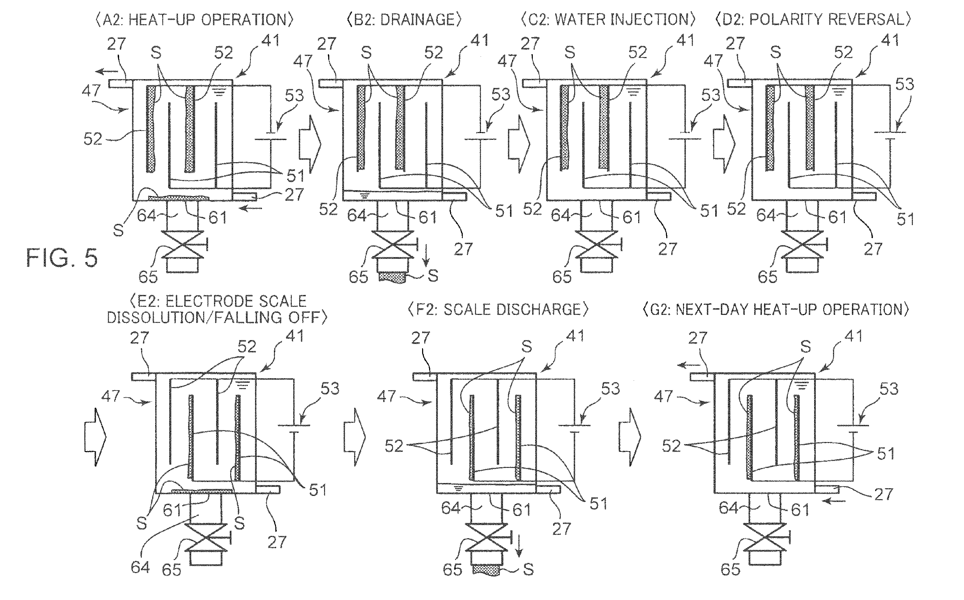

Fig. 5 is a schematic diagram illustrating control example 2 of the heat pump hot-water supply device 11. As illustrated in Fig. 5, control example 2 includes step A2 to step G2.

In control example 2, the reversal initial operation illustrated in step D2 to step F2 is identical to that of step B1 to step D1 in control example 1. Control example 2 differs from control example 1 in that now water in the container 47 is replaced by water having a higher electrolyte concentration, as illustrated in step B2, C2, after completion of the heat-up operation and before execution of the reversal initial operation illustrated in step D2 to step F2. The specific procedure involves the following.

High-temperature water is stored in the tank 15 upon execution of the heat-up operation in step A2. The scale component that is removed by the electrolysis device 41 during the heat-up operation deposits in the form of scale S on the plurality of second electrode plates 52. Part of the removed scale component precipitates at the bottom of the container 47. Upon reception of a signal of heat-up operation completion, the control unit 33 executes control of stopping the compressor 19 and stopping the pump 31, to terminate the heat-up operation.

Next, in step B2, the control unit 33 executes control of bringing the on-off valve 65 to an open state. As a result, water in the container 47 and the scale S that has precipitated on the bottom of the container 47 pass through the scale outlet 61 and the discharge pipe 64, and are discharged out of the container 47. During scale discharge, the pump 31 is stopped and there is no flow of water in the container 47. Once scale discharge is complete, the on-off valve 65 is brought to a closed state.

Next, in step C2, the control unit 33 injects water having a high electrolyte concentration into the container 47. Specifically, the control unit 33 drives the pump 31, to cause thereby water in the tank 15 to flow out through the water outlet provided at the bottom of the tank 15, pass through the water inlet pipe 27, and be injected into the container 47 of the electrolysis device 41. The water in the tank 15 has not been treated in the electrolysis device 41, and hence the electrolyte concentration of the water in the tank 15 is higher than that of water in the container 47 immediately after completion of the heat-up operation in step A2.

The water used for injection into the container 47 in step C2 is not limited to water stored in the tank 15. Specifically, it suffices that the water that is injected into the container 47 in step C2 be of higher electrolyte concentration than water in the container 47 immediately after completion of the heat-up operation in step A2, and for instance there can be used water of a water supply source, not shown, that is provided separately from the tank 15.

Next, in step D2, the control unit 33 executes control of reversing the polarity of the electrode pairs 49 in the electrolysis device 41. The reversal initial operation illustrated in step D2 to step F2 is identical to that of step B1 to step D1 in control example 1, and will not be explained again. Once the reversal initial operation is over, the control unit 33 executes a next-day heat-up operation illustrated in step G2 on the basis of the schedule of the heat-up operation. Step G2 is identical to step A2, except that now the polarity in the electrode pairs 49 is the reverse of that in step A2. Control identical to that of step B2 to step F2 is executed after completion of step G2.

### Control example 3

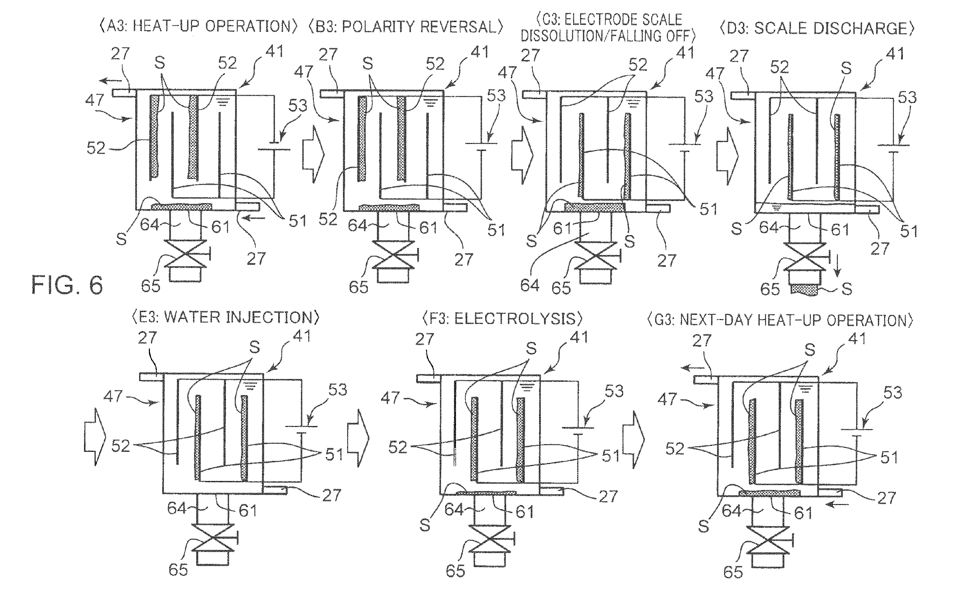

Fig. 6 is a schematic diagram illustrating control example 3 of the heat pump hot-water supply device 11. As illustrated in Fig. 6, control example 3 includes step A3 to step G3.

In control example 3, the heat-up operation illustrated in step A3 and the reversal initial operation illustrated in step B3 to step D3 are identical to those of step A1 to step D1 in control example 1. Control example 3 differs from control example 1 in that now, after completion of the reversal initial operation, there is further executed a second initial operation that involves injecting water into the container 47, as illustrated in step E3, and applying voltage to the electrode pairs 49 in a state where inflow and outflow of water into/out of the container 47 is blocked, as illustrated in step F3, until a predetermined second condition is satisfied. The specific procedure involves the following.

Upon completion of the heat-up operation (step A3) and the reversal initial operation (step B3 to step D3), the control unit 33 executes, in step E3, control of injecting water into the container 47. Specifically, the control unit 33 drives the pump 31, to cause thereby water in the tank 15 to flow out through the water outlet provided at the bottom of the tank 15, pass through the water inlet pipe 27, and be injected into the container 47 of the electrolysis device 41. In step E3, the on-off valve 65 is in a closed state. The water that is injected into the container 47 in step E3 is in a state of not having been subjected to an electrolysis treatment.

Next, in step F3, the control unit 33 executes control of applying voltage to the electrode pairs 49, in a state where inflow and outflow of water into/out of the container 47 is blocked, to treat thereby the water in the container 47. In step F3, the pump 31 is stopped, and hence there is no inflow or outflow of water into/out of the container 47. Application of voltage to the electrode pairs 49 is continued until the predetermined second condition is satisfied. In step F3, the scale component in water in the container 47 becomes deposited in the form of scale S on the plurality of first electrode plates 51.

Examples of the above second condition include, for instance, a condition that, in step F3, the time elapsed since application of voltage to the electrode pairs 49 reaches a predetermined reference time (time condition), or a condition that, in step E3, the hardness (concentration of scale component) of water with respect to the hardness (concentration of scale component) of injected water reaches a reference value that denotes that water hardness has been reduced to a predetermined proportion (water quality condition). In the former case, i.e. in the case of a time condition, the reference time can be set for instance to the time that elapses until the quality of water reaches a hardness that is half the initial hardness (ppm) at the time of voltage application, but the reference time is not limited thereto. In the latter case, i.e. in the case of a water quality condition, the reference value of quality of water can be set for instance to a hardness that is half the above-described initial hardness, but the reference value is not limited thereto.

Upon determining that the second condition is satisfied, the control unit 33 executes control of discontinuing the application of voltage to the electrode pairs 49, and proceeds to step G3.

Next, the control unit 33 executes a next-day heat-up operation illustrated in step G3, on the basis of the schedule of the heat-up operation. Step G3 is identical to step A3, except that now the polarity in the electrode pairs 49 is the reverse of that in step A3. Control identical to that of step B3 to step F3 is executed after completion of step G3.

### Second embodiment

The heat pump hot-water supply device 11 according to a second embodiment of the present invention will be explained next. The electrolysis device 41 and the flow of control in the second embodiment differ from those of the first embodiment. Features identical to those of the first embodiment will not be explained again.

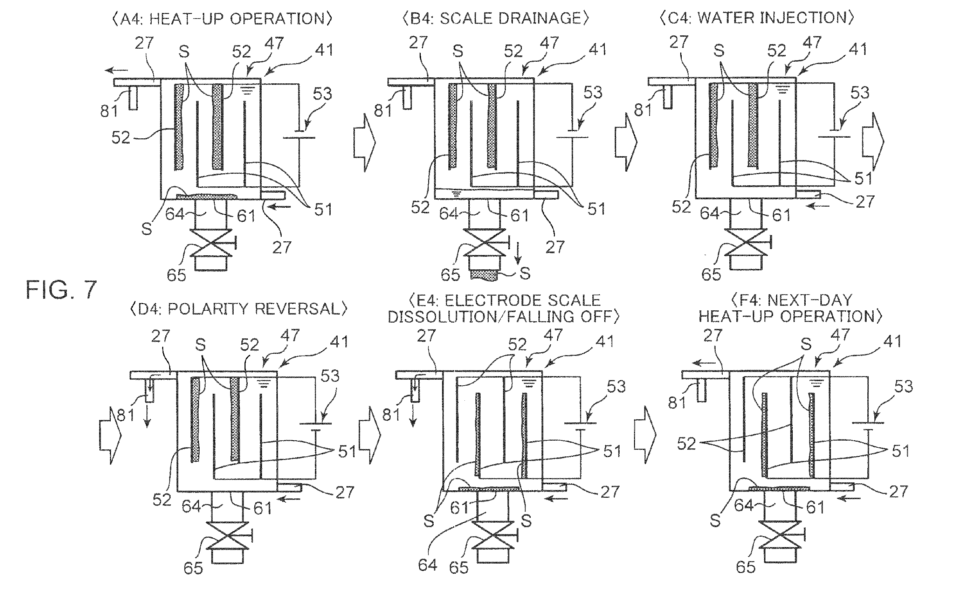

As illustrated in Fig. 7, the electrolysis device 41 in the second embodiment is provided with a branch passage 81 in the water inlet pipe 27. The branch passage 81 is positioned upstream of the water heat exchanger 21 and downstream of the exchanger electrolysis device 41. Control examples of the heat pump hot-water supply device 11 according to the second embodiment will be explained next.

### Control example 4

As illustrated in Fig. 7, control example 4 includes step A4 to step F4. In the reversal initial operation in control example 1, water in the container 47 is treated through application of voltage to the electrode pairs 49 in a state where inflow and outflow of water into/out of the container 47 is blocked. In the reversal initial operation of control example 4, however, water in the container 47 is treated through application of voltage to the electrode pairs 49 while water is caused to pass through the container 47. Control example 4 differs from control example 1 as regards this feature.

In control example 4, the control unit 33 performs control in such a manner that, in the reversal initial operation, the water treated in the electrolysis device 41 is discharged through the branch passage 81, after reversal of the polarity of the electrode pair 49 until the condition is satisfied. In a case where the above condition is determined on the basis of the quality of water, there is preferably provided, for instance, a sensor that detects the quality of water that is discharged from the branch passage 81, as illustrated in Fig. 7. This sensor allows detecting the quality of the water that is treated in the electrolysis device 41.

The water inlet pipe 27 and the branch passage 81 make up a T-junction. A switching mechanism, not shown, capable of switching the pathway of water, is provided at the branch point in this T-junction. Upon reaching this branch point, thus, the water that flows out of the electrolysis device 41 and through the water inlet pipe 27 can as a result flow into the branch passage 81 or to a site downstream of the branch point in the water inlet pipe 27. Instead of the switching mechanism, an on-off valve, not shown, may be provided in the branch passage 81, and an on-off valve, not shown, may be provided in the water inlet pipe 27 downstream of the branch point. The control unit 33 controls switching of the switching mechanism or opening and closing of the on-off valves. The specific control flow of control example 4 is as follows.

In control example 4, the heat-up operation is executed in step A4. The heat-up operation is identical to that of step A1 in control example 1. High-temperature water is stored in the tank 15 upon execution of the heat-up operation. During the heat-up operation, the scale component comprised in water that flows from the tank 15 to the water heat exchanger 21 through the water inlet pipe 27 is removed by the electrolysis device 41. The removed scale component deposits in the form of scale S on the plurality of second electrode plates 52. Part of the removed scale component precipitates at the bottom of the container 47.

Upon reception of a signal of heat-up operation completion, the control unit 33 executes control of stopping the compressor 19, stopping the pump 31, and discontinuing application of voltage to the electrode pairs 49, to terminate the heat-up operation.

In step B4 next, the control unit 33 executes control of discharging the scale that has precipitated in the container 47. During scale discharge, the pump 31 remains stopped and there is thus no flow of water in the container 47. The control unit 33 controls the on-off valve 65 to bring the latter to an open state. As a result, the scale S that has precipitated on the bottom of the container 47 passes through the scale outlet 61 and the discharge pipe 64, together with water from the container 47, and is discharged out of the container 47. Once scale discharge is complete, the on-off valve 65 is brought to a closed state.

Next, in step C4, the control unit 33 executes control of injecting water into the container 47. Specifically, the control unit 33 drives the pump 31, to cause thereby water in the tank 15 to flow out through the water outlet provided at the bottom of the tank 15, pass through the water inlet pipe 27, and be injected into the container 47 of the electrolysis device 41. In step C4, the on-off valve 65 is in a closed state.

Next, in step D4, the control unit 33 executes control of reversing the polarity of the electrode pairs 49 in the electrolysis device 41. The control unit 33 executes control of driving the pump 31. In step D4, the pathway at the T-junction between the water inlet pipe 27 and the branch passage 81 is selected by the switching mechanism or the on-off valves in such a manner that water flows into the branch passage 81. The timing at which this selection is performed may be the point in time at which the subsequent step E4 is initiated.

Next, in step E4, the control unit 33 continues application of voltage to the electrode pairs 49 the polarity whereof has been reversed in step D4, and continuously drives the pump 31, to treat the water that flows through the container 47. Specifically, water in the tank 15 is supplied into the container 47 of the electrolysis device 41 through the water inlet pipe 27, with the pump 31 in a driven state. The supplied water flows through the container 47, out to the water inlet pipe 27, and into the branch passage 81. The water that flows into the branch passage 81 is discharged out of the system of the heat pump hot-water supply device 11.

In step E4, the scale S deposited on the second electrode plates 52 in step A4 falls off the second electrode plates 52, and flows out of the container 47 into the water inlet pipe 27, together with water from inside of the container 47. In step E4, part of the scale component in water inside the container 47 becomes deposited in the form of scale S on the plurality of first electrode plates 51 and precipitates at the bottom of the container 47.

Application of voltage to the electrode pairs 49 and driving of the pump 31 are continued until a predetermined condition, such as the above-described time condition, water quality condition or the like, is satisfied. Upon determining that the above condition is satisfied, the control unit 33 executes control of discontinuing the application of voltage to the electrode pairs 49 and stopping the pump 31.

Once the reversal initial operation is over, the control unit 33 executes a next-day heat-up operation illustrated in step F4 on the basis of the schedule of the heat-up operation. Step F4 is identical to step A4, except that now the polarity in the electrode pairs 49 is the reverse of that in step A4. Control identical to that of step B4 to step E4 is executed after completion of step F4.

As explained above, the reversal initial operation is performed in the first embodiment and the second embodiment, and hence deposition of scale in the water heat exchanger 21 can be effectively suppressed.

In the first embodiment and the second embodiment, the reversal initial operation is executed at a timing other than during the heat-up operation, and hence the heat-up operation need not be interrupted for the sake of the reversal initial operation. Therefore, it becomes possible to prevent drops in the efficiency of the heat-up operation (heat pump efficiency) incurred in the execution of the reversal initial operation.

In control example 1 to control example 3, water in the water channel in the electrolysis device 41 is treated through application of voltage to the electrode pairs 49, in a state where inflow and outflow of water into/out of the water channel is blocked. The treated water in the water channel is discharged at the upstream position when the above condition is satisfied. Therefore, the amount of water that is discharged in the reversal initial operation can be kept to a minimum.

In control example 2, control of replacing water in the electrolysis device 41 by water of higher electrolyte concentration is executed, the reversal initial operation is executed, and hence it becomes possible to suppress drops in the efficiency of electrolysis in the reversal initial operation.

In control example 3, the concentration of scale component in the electrolysis device 41 is reduced beforehand through execution of the second initial operation; as a result, it becomes possible to suppress feeding of water having a high scale component concentration to the water heat exchanger 21 in the heat-up operation that is executed thereafter.

In the reversal initial operation of control example 4, voltage is applied to the electrode pairs 49 while water is supplied to the electrolysis device 41 and water treated in the electrolysis device 41 is discharged at the position upstream of the water heat exchanger 21, after reversal of the polarity of the electrode pairs 49 until the condition is satisfied. In this case, execution of the reversal initial operation can be accomplished by resorting to a simpler control scheme than that when the reversal initial operation is executed in a state where inflow and outflow of water into/out of the electrolysis device 41 is blocked.

### Other embodiments

The present invention is not limited to the above embodiments, and may accommodate various modifications and improvements without departing from the spirit of the invention.

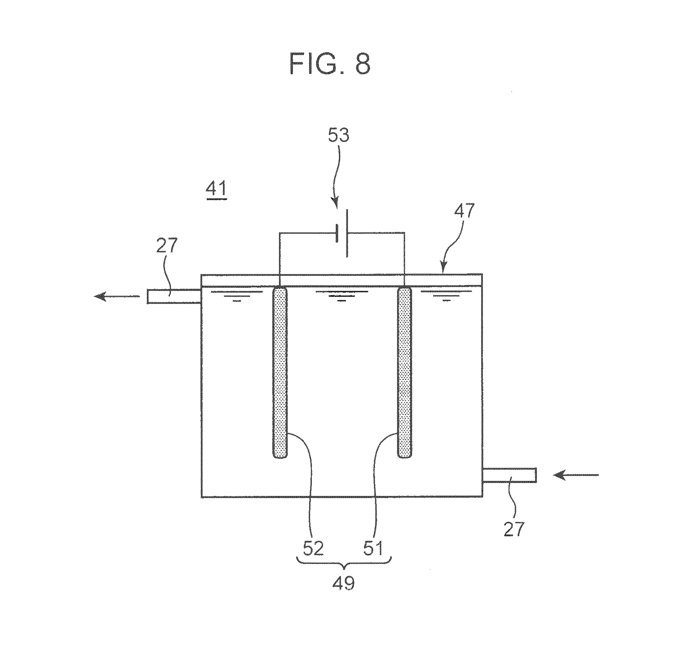

In the above embodiments, for instance, examples have been explained wherein the electrolysis device 41 has a plurality of electrode pairs 49, but the electrolysis device 41 is not limited thereto. For instance, the electrolysis device 41 may adopt a configuration wherein a single electrode pair 49 is disposed in the container 47, as illustrated in Fig. 8.

In the above embodiments, examples have been explained wherein the electrolysis device 41 is provided in the water inlet pipe 27 that is positioned downstream of the pump 31 and upstream of the water heat exchanger 21 in the flow channel of water in the heat pump hot-water supply device 11, but the embodiments are not limited thereto. The electrolysis device 41 may be provided upstream of the water heat exchanger 21 in the flow channel of water. Specifically, the electrolysis device 41 may be provided, for instance, at the water inlet pipe 27 upstream the pump 31, or may be provided in the water supply pipe 37 that supplies water to the tank 15 out of the water supply source. In a case where the electrolysis device 41 is provided in the water supply pipe 37, the branch passage 81 of the second embodiment is likewise provided in the water supply pipe 37.

In the second embodiment, an instance has been illustrated wherein a discharge passage is the branch passage 81 that branches from the water inlet pipe 27. However, the discharge passage may be a pipe that is connected, for instance, to a side wall of the container 47 of the electrolysis device 41, or may be configured in such a manner that the water treated in the electrolysis device 41 is discharged through that pipe. In this case, preferably, an on-off valve is provided in the pipe.

In the above embodiments, instances have been illustrated wherein the reversal initial operation is not performed during the heat-up operation, but the reversal initial operation can be performed also during the heat-up operation.

In the above embodiments, instances have been illustrated wherein a discharge portion (scale outlet 61) for discharging scale is provided at the bottom of the container 47, but the embodiments are not limited thereto. The discharge portion may be provided for instance at a site that is positioned downstream of the container 47. Specifically, the discharge portion may be for instance a valve (for example, a three-way valve) for scale discharge, provided in the water inlet pipe 27.

In the above embodiments, instances have been illustrated wherein the heat-up operation is not executed in a time slot that encompasses daytime, namely a time slot from 6:00 to 22:00, but the embodiments are not limited thereto. For instance, an additional heat-up operation may be executed, as needed, also in the time slot from 6:00 to 22:00 in the case of insufficient hot water as the latter is used in substantial amounts by the user. The reversal initial operation need not necessarily be performed after such an additional heat-up operation.

In the explanation of above embodiments, examples have been explained wherein the container 47 is substantially shaped as a rectangular parallelepiped, but the container 47 may adopt a prismatic shape other than a rectangular parallelepiped or a cylindrical shape.

The above embodiments have been explained on the basis of an example of a once-through hot-water supply device, but the embodiments are not limited thereto. The present invention can also be used in a hot-water supply device of a type such that part of the water (hot water) that is supplied through the hot water supply pipe 35 is returned again to the tank 15.

The above-described specific embodiments encompass mainly an invention having the following features:

(1) A heat pump hot-water supply device comprises: a tank (15) that stores water; a refrigerant circuit (10) having a water heat exchanger (21) that heats water through exchange of heat with a refrigerant; a water conduit (27, 29) through which water stored in the tank (15) is fed to the water heat exchanger (21) and water heated in the water heat exchanger (21) is returned to the tank (15); an electrolysis device (41) having an electrode pair (49), the electrolysis device being provided in a water channel upstream of the water heat exchanger (21), in a flow channel of water that includes the water conduit (27, 29); and a control unit (33) that executes a reversal initial operation of reversing a polarity of the electrode pair (49) in the electrolysis device (41), and discharging, at an upstream position that is positioned upstream of the water heat exchanger (21), water that is treated in the electrolysis device (41) during a period after polarity reversal until a predetermined condition is satisfied.

In this configuration, deposition of scale in the water heat exchanger (21) can be suppressed effectively thanks to the execution of the reversal initial operation. The specific procedure involves the following.

At an initial stage immediately after polarity reversal of the electrode pair (49) there dissolves the scale adhered to the anode (cathode, before reversal); as a result, the concentration of scale component becomes temporarily higher than that at polarity reversal. Water having thus a high scale component concentration is fed to the water heat exchanger (21); this may promote deposition of scale in the water heat exchanger (21).

In this configuration, therefore, water of high scale component concentration is discharged upstream of the water heat exchanger (21) through execution of the reversal initial operation. As a result, this allows preventing water having a high scale component concentration from being fed to the water heat exchanger (21), and hence it becomes possible to effectively suppress deposition of scale in the water heat exchanger (21).

(2) In the heat pump hot-water supply device, preferably, the control unit (33) performs control in such a manner that, in the reversal initial operation, water in the water channel of the electrolysis device (41) is treated through application of voltage to the electrode pair (49) in a state where inflow and outflow of water into/out of the water channel is blocked, and upon determining that the condition is satisfied, the treated water is discharged at the upstream position.

In this configuration a batch treatment is carried out wherein water in the water channel of the electrolysis device (41) is treated through application of voltage to the electrode pair (49) in a state where inflow and outflow of water into/out of the water channel is blocked, and the water treated in the water channel is discharged at the upstream position when the condition is satisfied. Therefore, the amount of water that is discharged in the reversal initial operation can be kept to a minimum.

(3) In the heat pump hot-water supply device, preferably, the control unit (33) executes control of replacing water in the electrolysis device (41) by water having a higher electrolyte concentration and executes the reversal initial operation, after completion of a heat-up operation of heating water in the water heat exchanger (21).

In a case where the reversal initial operation is executed after completion of the heat-up operation, the electrolyte concentration of water present in the electrolysis device (41) after completion of the heat-up operation is comparatively low, since that water is water having had the concentration of scale component lowered through treatment in the electrolysis device (41). In some instances, therefore, electrolysis efficiency may drop when the reversal initial operation is executed in that state.

In the above configuration, control of replacing water in the electrolysis device (41) by water of higher electrolyte concentration is executed and the reversal initial operation is executed, and hence it becomes possible to suppress drops in the efficiency of electrolysis in the reversal initial operation.

In the above configuration, moreover, the reversal initial operation is executed after completion of the heat-up operation, and hence the heat-up operation need not be interrupted for the sake of the reversal initial operation. Therefore, it becomes possible to prevent drops in the efficiency of the heat-up operation (heat pump efficiency) incurred in the execution of the reversal initial operation.

(4) In the heat pump hot-water supply device, preferably, the electrolysis device (41) further has a discharge portion (61) for discharging water to the exterior, and the control unit (33) performs control in such a manner that, in the reversal initial operation, water in the electrolysis device (41) is discharged through the discharge portion (61) upon determining that the condition is satisfied.

In this configuration, the discharge portion (61) is provided in the electrolysis device (41), and hence water that is treated in the electrolysis device (41) from the point in time of polarity reversal until the condition is satisfied can be reliably discharged at a position upstream of the water heat exchanger (21).

(5) After completion of the reversal initial operation, preferably, the control unit (33) in the heat pump hot-water supply device further executes a second initial operation of injecting water into the electrolysis device (41) and applying voltage to the electrode pair (49) in a state where inflow and outflow of water into/out of the electrolysis device (41) is blocked, until a predetermined second condition is satisfied.

The concentration of scale component in the water that is injected into the electrolysis device (41) after completion of the reversal initial operation may be high in some instances. During the heat-up operation, electrolysis is performed while water is caused to flow in the water channel of the electrolysis device (41). Accordingly, some of the water that is injected into the electrolysis device (41) after completion of the reversal initial operation flows out of the electrolysis device (41) without having been treated.

In the above configuration, therefore, the concentration of scale component in the electrolysis device (41) is reduced beforehand through execution of the second initial operation; as a result, it becomes possible to suppress feeding of water having a high scale component concentration to the water heat exchanger (21) in the heat-up operation that is executed thereafter.

(6) Specifically, for instance, the control unit (33) determines that the second condition is satisfied when the time elapsed since the start of application of voltage to the electrode pair (49) in the second initial operation reaches a predetermined second reference time, or when the quality of water that is treated in the second initial operation reaches a predetermined second reference value.

(7) In the heat pump hot-water supply device, the control unit (33) may perform control, in the reversal initial operation, in such a manner that voltage is applied to the electrode pair (49) while water is supplied to the electrolysis device (41) and water that is treated in the electrolysis device (41) is discharged at the upstream position, after reversal of the polarity of the electrode pair (49) until the condition is satisfied.

In this configuration, a sequential treatment is performed that involves applying voltage to the electrode pair (49) while water is supplied to the electrolysis device (41) and water that is treated in the electrolysis device (41) is discharged at the upstream position, after reversal of the polarity of the electrode pair (49) until the condition is satisfied. In this case, execution of the reversal initial operation can be accomplished by resorting to a simpler control scheme than that when the reversal initial operation is executed in a state where inflow and outflow of water into/out of the electrolysis device (41) is blocked.

(8) Specifically, for instance, a configuration may be adopted wherein a discharge passage (81) for discharging water treated in the electrolysis device (41) is provided at the upstream position.

(9) More specifically, for instance, a configuration may be adopted wherein the discharge passage (81) is a branch passage (81) that is positioned upstream of the water heat exchanger (21) and branches from the water conduit (27), and the control unit (33) performs control in such a manner that, in the reversal initial operation, water that is treated in the electrolysis device (41) passes through the branch passage (81) and is then discharged, after reversal of the polarity of the electrode pair (49) until the condition is satisfied.

(10) In the heat pump hot-water supply device, the control unit (33) may determine that the condition is satisfied, for instance, when the time elapsed since reversal of the polarity of the electrode pair (49) in the reversal initial operation reaches a predetermined reference time. In this case, there is no need to provide in particular a sensor or the like for detecting the quality of water.

Further, the control unit (33) may determine that the condition is satisfied, for instance, when the quality of water that is treated in the reversal initial operation reaches a predetermined reference value. In this case, feeding of water having a high scale component concentration to the water heat exchanger (21) can be prevented yet more reliably than in an instance where the above determination is performed on the basis of the above-described reference time.

### Explanation of Reference Numerals

10 refrigerant circuit
11 heat pump hot-water supply device
15 tank
21 water heat exchanger
27 water inlet pipe
29 hot water outlet pipe
31 pump
32 controller
33 control unit
34 storage unit
35 hot water supply pipe
37 water supply pipe
41 electrolysis device
49 electrode pair
51 first electrode plate
52 second electrode plate
53 power source
61 outlet
81 branch passage

## Claims

1. A heat pump hot-water supply device, comprising:
a tank (15) that stores water;
a refrigerant circuit (10) having a water heat exchanger (21) that heats water through exchange of heat with a refrigerant;
a water conduit (27, 29) through which water stored in the tank (15) is fed to the water heat exchanger (21) and water heated in the water heat exchanger (21) is returned to the tank (15);
an electrolysis device (41) having an electrode pair (49), the electrolysis device being provided in a water channel upstream of the water heat exchanger (21), in a flow channel of water that includes the water conduit (27, 29); and
a control unit (33) that executes a reversal initial operation of reversing a polarity of the electrode pair (49) in the electrolysis device (41), and discharging, at an upstream position that is positioned upstream of the water heat exchanger (21), water that is treated in the electrolysis device (41) during a period after polarity reversal until a predetermined condition is satisfied.

2. The heat pump hot-water supply device according to claim 1, wherein the control unit (33) performs control in such a manner that, in the reversal initial operation, water in the water channel of the electrolysis device (41) is treated through application of voltage to the electrode pair (49) in a state where inflow and outflow of water into/out of the water channel of the electrolysis device is blocked, and upon determining that the condition is satisfied, the treated water is discharged at the upstream position.

3. The heat pump hot-water supply device according to claim 2, wherein the control unit (33) executes control of replacing water in the electrolysis device (41) by water having a higher electrolyte concentration and executes the reversal initial operation, after completion of a heat-up operation of heating water in the water heat exchanger (21).

4. The heat pump hot-water supply device according to claim 2 or 3, wherein the electrolysis device (41) further has a discharge portion (61) for discharging water to the exterior, and
the control unit (33) performs control in such a manner that, in the reversal initial operation, water in the electrolysis device (41) is discharged through the discharge portion (61) upon determining that the condition is satisfied.

5. The heat pump hot-water supply device according to any one of claims 2 to 4, wherein after completion of the reversal initial operation, the control unit (33) further executes a second initial operation of injecting water into the electrolysis device (41), and applying voltage to the electrode pair (49) in a state where inflow and outflow of water into/out of the electrolysis device (41) is blocked, until a predetermined second condition is satisfied.

6. The heat pump hot-water supply device according to claim 5, wherein the control unit (33) determines that the second condition is satisfied when the time elapsed since the start of application of voltage to the electrode pair (49) in the second initial operation reaches a predetermined second reference time, or when the quality of water that is treated in the second initial operation reaches a predetermined second reference value.

7. The heat pump hot-water supply device according to claim 1, wherein the control unit (33) performs control in such a manner that, in the reversal initial operation, voltage is applied to the electrode pair (49) while water is supplied to the electrolysis device (41) and water that is treated in the electrolysis device (41) is discharged at the upstream position, after reversal of the polarity of the electrode pair (49) until the condition is satisfied.

8. The heat pump hot-water supply device according to claim 7, wherein a discharge passage (81) for discharging water treated in the electrolysis device (41) is provided at the upstream position.

9. The heat pump hot-water supply device according to claim 8, wherein the discharge passage (81) is a branch passage (81) that branches from the water conduit (27) positioned upstream of the water heat exchanger (21), and
the control unit (33) performs control in such a manner that, in the reversal initial operation, water that is treated in the electrolysis device (41) passes through the branch passage (81) and is then discharged, after reversal of the polarity of the electrode pair (49) until the condition is satisfied.

10. The heat pump hot-water supply device according to any one of claims 1 to 9, wherein the control unit (33) determines that the condition is satisfied, when the time elapsed since reversal of the polarity of the electrode pair (49) in the reversal initial operation reaches a predetermined reference time, or when the quality of water that is treated in the reversal initial operation reaches a predetermined reference value.
